# EUROPÄISCHE PATENTANMELDUNG

(11) **EP 1 256 921 A1**
(43) Veröffentlichungstag der Anmeldung: **13.11.2002**
(21) Anmeldenummer: 01810452.1
(22) Anmeldetag: 09.05.2001
(51) Int. Cl.: G09B 25/00

(54) **Verfahren zur Erstellung eines Bausatzes für die Herstellung eines dreidimensionalen Körpers mit einer beliebig gekrümmten Oberfläche**

(71) Anmelder: Keable Briers, 3213 Liebistorf (CH)
(72) Erfinder: Briers, Keable, 3213 Liebistorf (CH)
(74) Vertreter: Roshardt, Werner Alfred, Dipl.-Phys.

(57) **Zusammenfassung**

Ein Verfahren zur Erstellung eines Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) und Standardbauelemente (B₁₁₁, B₁₁₂) umfassenden Bausatzes für die Herstellung eines dreidimensionalen Körpers (10) mit einer beliebig gekrümmten Oberfläche umfasst die Schritte, die Körperoberfläche zu definieren, die Standardbauelemente (B₁₁₁, B₁₁₂) bereitzustellen, eine an die Körperoberfläche angenäherte Grundstruktur derart zu bestimmen, dass sie vollständig aus den Standardbauelementen (B₁₁₁, B₁₁₂) zusammensetzbar ist und vollständig in dem von der Körperoberfläche begrenzten Raum derart angeordnet werden kann, dass sie an keiner Stelle die Körperoberfläche durchdringt; sowie die Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) mit je einer dreidimensionale Bauform derart zu bestimmen und anzufertigen, dass der Körper (10) vollständig herstellbar ist, indem die Grundstruktur aus den Standardbauelementen (B₁₁₁, B₁₁₂) zusammengesetzt wird und an der Grundstruktur die Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) angebracht werden, wobei wenigstens ein Teil ihrer Oberflächenpartien an der Körperoberfläche angeordnet werden. Das Verfahren und der mittels dem Verfahren erstellte Bausatz ermöglichen eine vergleichsweise einfache und kostengünstige Herstellung des dreidimensionalen Körpers (10).

## Beschreibung

### Technisches Gebiet

Die Erfindung betrifft einen Bausatz für die Herstellung eines dreidimensionalen Körpers mit einer beliebig gekrümmten Oberfläche sowie ein Verfahren zur Erstellung eines solchen Bausatzes.

### Stand der Technik

Den Designern und Entwicklern stehen eine Vielzahl von Konstruktions- und Zeichnungsprogrammen zur Verfügung, welche es erlauben, beliebig komplizierte dreidimensionale Körper in einer virtuellen Welt auf dem Computer zu entwerfen, zu konstruieren und zu visualisieren. Weiter gibt es zahlreiche Vorrichtungen und Verfahren zum Erfassen und Digitalisieren (d.h. Scannen) der Formen bzw. Formdaten von dreidimensionalen Objekten sowie zum Speichern von solchen Formdaten.

Demgegenüber ist die Herstellung von dreidimensionalen Körpern mit komplizierten Formen und insbesondere mit beliebig gekrümmten Oberflächen in der realen Welt nach wie vor eine aufwendige Angelegenheit, die erhebliche Kosten verursacht. Zwar existieren für die Massenanfertigung von dreidimensionalen Körpern bzw. Teilen Verfahren wie z.B. das Spritzgussverfahren, welche es erlauben, solche Körper nach einer mit grossen Anfangskosten verbundenen Initialisierungsphase zu vergleichsweise geringen laufenden Kosten zu produzieren. Im Falle der Herstellung in Grossserie können die Anfangskosten auf eine grosse Zahl von Teilen verteilt werden, so dass die Stückkosten insgesamt vergleichsweise niedrig ausfallen.

Es gibt jedoch zahlreiche Anwendungen, bei denen die Herstellung von kompliziert geformten Körpern in Kleinserie oder sogar als Einzelstücke gewünscht wird. So werden z.B. Modelle für Anwendungen in der Architektur, Modelle für Designstudien im Zusammenhang mit industriell gefertigten Gütern oder Prototypen von solchen Gütern und auch Modelle zur Herstellung von Negativformen in der Giessereitechnik typischerweise in Kleinserie oder als Einzelstücke hergestellt. Die bekannten Verfahren zur kleinseriellen Herstellung oder Einzelanfertigung von dreidimensionalen Körpern mit beliebig gekrümmten Oberflächen sind aber arbeitsaufwändig, erfordern grosses handwerkliches bzw. fachtechnisches Können und sind entsprechend teuer. Für architektonische Modelle, insbesondere solche in verkleinertem Massstab, begnügt man sich deshalb aus Kostengründen häufig mit stark vereinfachten dreidimensionalen Modellen, welche die gekrümmten Oberflächen lediglich ungenau oder überhaupt nicht wiedergeben, obwohl dies hinsichtlich einer optimalen gestalterischen Planung unbefriedigend ist. Im Falle von Modellen für die Giessereitechnik und auch für andere Anwendungen hingegen ist bisher kein Weg bekannt, der an den grossen Kosten im Zusammenhang mit dem Modellbau vorbei führt.

### Darstellung der Erfindung

Aufgabe der Erfindung ist die Angabe eines Verfahrens zur Herstellung eines dreidimensionalen Körpers mit einer beliebig gekrümmten Oberfläche, das vergleichsweise einfach durchzuführen und kostengünstig ist.

Die Lösung der Aufgabe ist durch die Merkmale des Anspruchs 1 definiert. Gemäss der Erfindung umfasst ein Verfahren zur Erstellung eines Spezialbauelemente und Standardbauelemente umfassenden Bausatzes für die Herstellung eines dreidimensionalen Körpers mit einer beliebig gekrümmten Oberfläche die folgenden Verfahrensschritte:
a) In einem ersten Schritt wird die Oberfläche des herzustellenden dreidimensionalen Körpers definiert. Je nach Art der Körperoberfläche kann diese mittels mathematischen Funktionen im dreidimensionalen Raum kontinuierlich definiert werden, oder sie kann durch Angabe einer endlichen Anzahl von Punkten der Oberfläche im dreidimensionalen Raum (sog. Stützpunkte) diskret definiert werden.
b) In einem weiteren Verfahrensschritt wird eine Vielzahl von Standardbauelementen bereitgestellt. Falls diese Standardbauelemente nicht unmittelbar zur Verfügung stehen, werden sie zunächst entweder beschafft, angefertigt oder auf andere geeignete Art bereit gestellt.
c) In einem weiteren Schritt des Verfahrens gemäss der Erfindung wird eine an die Körperoberfläche angenäherte Grundstruktur derart bestimmt, dass sie vollständig aus den Standardbauelementen zusammensetzbar ist und vollständig in dem von der Körperoberfläche begrenzten Raum derart angeordnet werden kann, dass sie an keiner Stelle die Körperoberfläche durchdringt.
d) Erfindungsgemäss werden in einem weiteren Verfahrensschritt die Spezialbauelemente mit je einer dreidimensionalen Bauform derart bestimmt, dass der dreidimensionale Körper vollständig herstellbar ist, indem die Grundstruktur aus den Standardbauelementen zusammengesetzt wird und an der Grundstruktur die Spezialbauelemente angebracht werden, wobei wenigstens ein Teil ihrer Oberflächenpartien an der Körperoberfläche angeordnet werden.
e) Schliesslich werden in einem weiteren Schritt des Verfahrens gemäss der Erfindung die Spezialbauelemente entsprechend der im Schritt d) bestimmten Bauformen angefertigt.

Ein mittels des erfindungsgemässen Verfahrens erstellter Bausatz für die Herstellung eines dreidimensionalen Körpers mit einer beliebig gekrümmten Oberfläche umfasst Spezialbauelemente und Standardbauelemente. Gemäss der Erfindung zeichnet sich ein solcher Bausatz durch eine Ausbildung der Spezialbauelemente und der Standardbauelemente derart aus, dass der Körper bzw. seine Oberfläche vollständig herstellbar ist, indem zunächst eine Grundstruktur aus den Standardbauelementen zusammengesetzt wird und anschliessend an der Grundstruktur die Spezialbauelemente angebracht werden, wobei wenigstens ein Teil ihrer Oberflächenpartien an der Körperoberfläche angeordnet werden.

Im Zusammenhang mit der vorliegenden Beschreibung und den Patentansprüchen wird unter einem Standardbauelement ein vielseitig oder universell verwendbares Bauelement verstanden, das zur Herstellung einer Vielzahl von Grundstrukturen mit unterschiedlichen Formen verwendet werden kann. Vorzugsweise sind die Standardbauelemente als modulare Einheiten zum Zusammensetzen von Grundstrukturen ausgebildet, d.h. sie sind derart ausgebildet, dass eine Grundstruktur aus lediglich einem einzigen Standardbauelement allein, einer Vielzahl von Standardbauelementen und/oder aus mehreren Teil-Grundstrukturen zusammengesetzt sein kann, die ihrerseits wiederum aus einer Vielzahl von Standardbauelementen zusammengesetzt sein können.

Unter einer vollständigen Anordnung der Grundstruktur in dem von der Körperoberfläche begrenzten Raum wird verstanden, dass sich die Grundstruktur vollständig auf der vom Körper eingenommenen Seite der Körperoberfläche befindet, wobei aber die Strukturoberfläche selbst durchaus auch teilweise oder sogar vollständig die Körperoberfläche bilden kann. Im Falle eines Vollkörpers ohne Hohlraum ist die Grundstruktur in diesem Sinne vollständig in dem von der Körperoberfläche begrenzten Innenraum angeordnet. Die gesamte Oberfläche eines solchen Körper wird durch die Aussenfläche des Körpers gebildet. Demgegenüber ist im Falle eines mit einer Körperwandung versehenen Hohlkörpers die Grundstruktur zwischen der durch eine erste Partie der Körperoberfläche gebildeten Aussenfläche und der durch eine zweite Partie der Körperoberfläche gebildeten Innenfläche der Körperwandung angeordnet.

Unter einer beliebig gekrümmten Oberfläche ist eine Oberfläche mit irgendwelchen beliebigen Flächenkrümmungen zu verstehen, wobei die Oberfläche selbstverständlich auch abschnittsweise oder sogar vollständig flach (d.h. ungekrümmt) sein kann.

Es versteht sich von selbst, dass ein mit Hilfe eines erfindungsgemässen Bausatzes hergestellter Körper selbst wieder ein Teilkörper bzw. ein Bauteil zur Herstellung einer grösseren Struktur oder eines grösseren Körpers sein kann. Dieser grössere Körper kann nebst dem aus dem erfindungsgemässen Bausatz hergestellten Teilkörper weitere Teilkörper umfassen, die ihrerseits wiederum aus erfindungsgemässen Bausätzen, aus anderen Bausätzen oder auf andere Art hergestellt sein können.

Mit Hilfe eines erfindungsgemässen Bausatzes lässt sich ein dreidimensionaler Körper mit einer beliebig gekrümmten Oberfläche auf einfache Art kostengünstig herstellen, indem zunächst eine Grundstruktur aus den Standardbauelementen zusammengesetzt wird und anschliessend an der Grundstruktur die Spezialbauelemente angebracht werden, wobei wenigstens ein Teil ihrer Oberflächenpartien an der Körperoberfläche angeordnet werden. In der Regel müssen lediglich diejenigen Spezialbauelemente zu entsprechenden Kosten separat angefertigt werden, welche an den gekrümmten Partien der Körperoberfläche anzuordnen sind. Der restliche Teil des dreidimensionalen Körpers lässt sich üblicherweise aus kostengünstigen Standardbauelementen herstellen.

Die Erfindung ist in den verschiedensten Gebieten in vorteilhafter Weise anwendbar. Sie ist z.B. hervorragend geeignet als Hilfsmittel für Designer von industriellen Gütern, die dreidimensionale Modelle für industrielle Anwendungen zu entwerfen haben. Die Erfindung eignet sich aber auch bestens zur Herstellung von dreidimensionalen Puzzles von beliebigen räumlichen Objekten, welche z.B. für spielerische Zwecke, für Unterrichtszwecke oder für Werbezwecke verwendbar sind. Das erfindungsgemässe Verfahren und die Bausätze gemäss der Erfindung sind auch sehr gut zur Verwendung im Bereich des Bauwesens geeignet, und zwar nicht nur zur Herstellung von Gebäudemodellen in einem verkleinerten Massstab, sondern auch zur Herstellung von Gebäuden selbst, die mit kompliziert gekrümmten Oberflächen beispielsweise an den Gebäudefassaden versehen sind. Die Erfindung ist ebenfalls in vorteilhafterweise zur Herstellung von Formen und Modellen in der Giessereitechnik geeignet, und zwar sowohl zur Herstellung von Körpern mit beliebig gekrümmten Aussenflächen (auch als Positivflächen bezeichnet) als auch zur Herstellung von Körpern mit beliebig gekrümmten Innenflächen (auch als Negativflächen bezeichnet).

Die Erfindung kann weiter auch in vorteilhafter Weise für das so genannte "Reverse Engineering" eingesetzt werden, indem nach dem Einscannen der dreidimensionalen Form eines realen Objektes und nach der computergestützten Bearbeitung der entsprechenden Formdaten in der virtuellen Welt anhand der bearbeiteten Formdaten mittels eines erfindungsgemässen Bausatzes wiederum eine reale dreidimensionale Form hergestellt wird. Auf analoge Art können, falls keine Bearbeitung in der virtuellen Welt vorgenommen wird, auch dreidimensionale Kopien bzw. Duplikate der Oberflächen von dreidimensionalen Objekten hergestellt werden.

Es können aber auch zunächst dreidimensionale Gebilde ausschliesslich in der virtuellen Welt entworfen und bis zu einem gewissen Grad entwickelt und getestet werden, z.B. dreidimensionale Formteile zur Herstellung von Werkzeugmaschinen und/oder Robotern. Anschliessend können anhand der virtuellen Formdaten mit Hilfe von erfindungsgemässen Bausätzen die entsprechenden realen dreidimensionalen Formteile hergestellt werden, und zwar sowohl Formteile zur Herstellung von Funktionsmodellen in der realen Welt als auch Formteile zur Herstellung der Werkzeugmaschinen und Roboter etc. selbst.

Ein weiteres vorteilhaftes Einsatzgebiet für die Erfindung ist die Herstellung von dreidimensionalen Fantasieformen für Trickfilme, Computerspiele usw. Mit Hilfe von erfindungsgemässen Bausätzen können beliebige dreidimensionale Formgebilde hergestellt werden. Diese können dann gefilmt, eingescannt oder auf andere geeignete Art digitalisiert und anschliessend zur Herstellung von virtuellen Scheinwelten verwendet werden.

Die Bauelemente eines erfindungsgemässen Bausatzes (d.h. sowohl die Standardbauelemente als auch die Spezialbauelemente) können je nach Verwendung des Bausatzes aus irgendwelchen für die Herstellung von festen Körpern geeigneten Materialien angefertigt sein bzw. angefertigt werden, sofern diese einigermassen formbeständig sind. Geeignete Materialien sind je nach Verwendungszweck z.B. Plastik, Kautschuk, Silikon, Silikon-Verbundstoffe, Holz, feste Kunststoffe, Polymerkunststoffe, Kunstharz-Verbundstoffe, Metall, Leichtmetall (insbesondere Aluminium), Lehm, Keramik, Beton, Formsand mit Bindemittel, Stein, gebrannter Gips, Wachs, usw. Dabei ist es nicht erforderlich sämtliche Bauelemente eines Bausatzes aus dem selben Material anzufertigen. So können z.B. diejenigen Standarbauelemente, die beim fertigen Körper nicht an dessen Oberfläche angeordnet und somit versteckt sind, aus kostengünstigeren Materialien angefertigt werden als die an der Körperoberfläche anzuordnenden Spezialbauelemente, welche in der Regel höhere Anforderungen hinsichtlich der Oberflächenbeschaffenheit erfüllen müssen.

Die typischerweise in grossen Stückzahlen erforderlichen Standardbauelemente werden vorteilhafterweise durch Anwendung von gebräuchlichen Verfahren für die Massenproduktion, wie z.B. Kunststoff-Spritzgussverfahren angefertigt. Die Spezialbauelemente hingegen, die üblicherweise lediglich in kleiner Stückzahl benötigt werden, werden im Schritt e) des Verfahrens gemäss der Erfindung vorteilhafterweise mittels gebräuchlicher Verfahren für die Herstellung von dreidimensionalen Prototypen angefertigt. Für diesen Zweck geeignet sind z.B. Fräsverfahren zur Herstellung von dreidimensionalen Formen, Funkenerosionsverfahren, diverse Giessverfahren (u.a. auch solche, bei denen "verlorene" Modelle eingesetzt werden, die z.B. aus Styropor oder Wachs gefertigt sein können und beim Giessvorgang zerstört werden) Stereolithografieverfahren und andere bekannte Verfahren.

Gemäss einer vorteilhaften Variante des erfindungsgemässen Verfahrens wird im Verfahrensschritt c) die Grundstruktur durch Schnittflächen aus drei Reihen von Parallelebenen bestimmt, wobei die Parallelebenen von jeder Reihe die Parallelebenen der beiden anderen Reihen je unter einem vorgegebenen Winkel schneiden. Vorzugsweise sind die parallelen Parallelebenen von jeder Reihe je mit einem einheitlichen Abstand (gemessen senkrecht zu den Ebenen) zwischen den Ebenen angeordnet. Die Grundstruktur hat dann eine Matrixform, die sich besonders einfach bestimmen und aus identischen Standardbauelementen zusammensetzen lässt. Die Parallelebenen einer Reihe können rechtwinklig oder unter einem beliebigen Winkel zu den Parallelebenen der beiden anderen Reihen angeordnet sein.

Anstelle einer aus drei Reihen von Parallelebenen bestimmbaren Form kann die Grundstruktur jedoch auch eine andere geeignete Form aufweisen. Sie kann z.B. eine Form derart aufweisen, dass sie aus zueinander identischen, quaderförmigen Standardbauelementen zusammensetzbar ist, die jeweils nach für Backsteinbauwerke bekannter Art bezüglich von benachbarten Standardbauelementen um einen Bruchteil der Quaderlänge versetzt angeordnet werden, um eine grössere Festigkeit der Grundstruktur zu erreichen.

Es sind aber auch rotationssymmetrische, axialsymmetrische und/oder kugelsymmetrische Grundstrukturen möglich. Diese können insbesondere zur Herstellung von dreidimensionalen Körpern mit kreiszylinder- oder kugelähnlichen Formen geeignet sein. Je nach Verwendungszweck sind auch zahlreiche andere geeignete Grundstrukturformen möglich.

Vorzugsweise wird die Grundstruktur im Schritt c) nach Art einer Kristallstruktur derart bestimmt, dass nach dem Zusammensetzen der Grundstruktur aus den Standardbauelementen diese an den Gitterpunkten eines Ausschnittes aus einem regelmässigen Raumgitter, insbesondere einem Bravais-Gitter, angeordnet sind. Eine solche kristallförmige Struktur bzw. Kristallstruktur ist mathematisch einfach bestimmbar und kann vergleichsweise einfach gezeichnet und berechnet werden. Je nach Bauform der zur Verfügung stehenden Standardbauelemente kann irgend ein für diese Bauform geeignetes Bravais-Gitter gewählt werden.

Eine bevorzugte Variante des erfindungsgemässen Verfahrens zeichnet sich dadurch aus, dass im Schritt d) wenigstens eine an der Körperoberfläche anzuordnende Oberflächenpartie eines Spezialbauelementes mittels Spline-Interpolation zwischen definierten Stützpunkten der Körperoberfläche in der Umgebung des Spezialbauelementes bestimmt wird, wobei die Spline-Interpolation vorzugsweise mit Hilfe sogenannter NURBS (Non-Uniform Rational B-Splines) durchgeführt wird. Vorteilhafterweise werden sogar sämtliche Oberflächenpartien der Spezialbauelemente, die an der Körperoberfläche anzuordnen sind, mittels NURBS bestimmt. Mit Hilfe von NURBS können glatte und stetige Oberflächen derart bestimmt werden, dass sie auch hohen Anforderungen an das Design von qualitativ hochstehenden Produkten zu genügen vermögen.

Zur Bestimmung der an der Körperoberfläche anzuordnenden Oberflächenpartien der Spezialbauelemente können jedoch auch andere gebräuchliche Interpolations- und Extrapolationsverfahren angewendet werden, oder diese Oberflächenpartien können auch - im Falle einer mathematisch definierten Oberfläche des herzustellenden dreidimensionalen Körpers - exakt gemäss der mathematischen Oberflächendefinition angefertigt werden.

Die Oberflächen der einzelnen Bauelemente sind vorteilhafterweise derart ausgebildet, dass die Flächenübergänge zwischen benachbarten Spezial- und/oder Standardbauelementen an der Oberfläche des mit dem Bausatz hergestellten dreidimensionalen Körpers vollkommen stetig und glatt sind. Entlang ihrer Verbindungskanten an der Körperoberfläche stimmen dann benachbarte Bauelemente sowohl hinsichtlich ihrer Randlinien als auch hinsichtlich ihrer Tangentenflächen überein.

Die Standardbauelemente eines erfindungsgemässen Bausatzes können derart ausgebildet sein, dass sie in raumfüllender Anordnung zwischenraumfrei zu der an die Körperoberfläche angenäherten Grundstruktur zusammensetzbar sind. Eine aus solchen Standardbauelementen zusammengesetzte Grundstruktur zeichnet sich durch eine gute Festigkeit der Struktur aus. Zudem ist sie auf einfache Art problemlos zusammensetzbar, so dass in der Regel auf eine Gebrauchsanleitung zum Zusammensetzen verzichtet werden kann. Dabei können die einzelnen Standardbauelemente (wie übrigens die Spezialbauelemente ebenfalls) durchaus auch als Hohlkörper und/oder als Körper mit offenen Seiten ausgebildet sein. Grundsätzlich sind auch andere Ausbildungen von Standardbauelementen möglich, die nicht raumfüllend zu einer Grundstruktur zusammensetzbar sind.

Vorzugsweise sind sämtliche Standardbauelemente eines erfindungsgemässen Bausatzes im Wesentlichen identisch zueinander ausgebildet. Dabei ist unter einer im Wesentlichen identischen Ausbildung der Standardelemente zu verstehen, dass sie mit Ausnahme allfälliger Verbindungselemente zur gegenseitigen Verbindung identisch zueinander ausgebildet sind. Ein Bausatz mit identischen Standardbauelementen bietet Vorteile hinsichtlich einer kostengünstigen Massenproduktion und der Lagerhaltung der Standardbauelemente.

Als Alternative zu einem Bausatz, bei dem sämtliche Standardbauelemente im Wesentlichen zueinander identisch sind, sind gemäss der Erfindung jedoch auch Bausätze mit verschiedenen Standardbauelementen möglich. Insbesondere kann ein solcher Bausatz Standardbauelemente in Form von vorgefertigten, häufig benötigten Standardgrundstrukturen umfassen.

Vorteilhafterweise weisen sämtliche Standardbauelemente eines erfindungsgemässen Bausatzes einfache geometrische Bauformen auf. Sie können z.B. die Form eines Würfels, eines Quaders, eines Parallelepipeds, eines Tetraeders, eines Oktaeders, eines Rhomben-Dodekaeders, eines Pentagon-Dodekaeders, eines Ikosaeders oder eines anderen Polyeders aufweisen. Standardbauelemente mit derart einfachen geometrischen Bauformen können problemlos mittels bekannter Verfahren für die Massenproduktion angefertigt und zudem für den Transport und die Lagerhaltung platzsparend gestapelt werden.

Gemäss einer bevorzugten Ausführungsart der Erfindung sind die Standardbauelemente eines erfindungsgemässen Bausatzes als wiederverwendbare Bauelemente ausgebildet und ist jedes Bauelement, d.h. sowohl jedes Standardbauelement als auch jedes Spezialbauelement, mit Verbindungsmitteln zum wahlweise wieder lösbaren Verbinden mit wenigstens einem weiteren Bauelement des Bausatzes versehen. In diesem Fall kann die Grundstruktur aus wiederverwendbaren Standardbauelementen zusammengesetzt werden, indem diese wahlweise wieder lösbar miteinander verbunden werden, und die Spezialbauelemente können wahlweise wieder lösbar an der Grundstruktur angebracht werden. Ein dreidimensionaler Körper mit beliebig gekrümmter Oberfläche kann somit aus einem wenigstens teilweise wiederverwendbaren Bausatz hergestellt werden. Dies ist insbesondere vorteilhaft in einer frühen Design- bzw. Entwicklungsphase zur Herstellung eines dreidimensionalen Körpers bzw. Gegenstandes, da in dieser Phase die dreidimensionale Form des Gegenstandes noch häufigen Änderungen unterworfen ist. Um verschiedene Designvarianten des Gegenstandes herzustellen reicht es häufig aus, dass bei einem aus einem solchen Bausatz hergestellten Gegenstand lediglich einige wenige Spezialbauelemente durch geänderte Spezialbauelemente ersetzt werden. Im Gegensatz zur sonst üblichen Prototypenherstellung muss nicht jedesmal von Grund auf ein neues Modell geschaffen und das alte Modell entsorgt werden. Zudem können zumindest die Standardbauelemente eines solchen Bausatzes, sobald der daraus hergestellte dreidimensionale Körper einmal nicht mehr benötigt wird, wiederum voneinander gelöst und zur Herstellung eines völlig anderen dreidimensionalen Gegenstandes verwendet werden.

Die Verbindungsmittel zur wahlweise wieder lösbaren Verbindung von Bauelementen können eine an einem ersten Bauelement ausgebildete Steckerpartie und eine an einem zweiten Bauelement ausgebildete Buchsenpartie umfassen, die komplementär zur Steckerpartie ausgebildet ist, wobei die Stecker- und Buchsenpartien als integrale Bestandteile der Bauelemente ausgebildet sein können. Die Bauelemente können dann in einem einzigen Spritzgussvorgang zusammen mit den Verbindungsmitteln angefertigt werden. Die Stecker- und Buchsenpartien können weiter derart ausgebildet sein, dass nach dem Einstecken der Stecker- in die Buchsenpartie eine quer zur Einsteckrichtung formschlüssige Verbindung zwischen den beiden Bauelementen geschaffen wird.

Die Verbindungsmittel können aber auch ein an einer Aussenfläche eines ersten Bauelementes angebrachtes erstes Klettelement und ein an einer Aussenfläche eines zweiten Bauelementes angebrachtes zweites Klettelement umfassen. Zum Verbinden der beiden Bauelemente miteinander können diese mit ihren mit den Klettelementen versehenen Aussenflächen gegeneinander gedrückt werden, um eine Verbindung nach Art eines Klettverschlusses zu schaffen.

Die Bauelemente eines erfindungsgemässen Bausatzes können jedoch auch mit anderen gebräuchlichen Verbindungsmitteln miteinander verbunden werden, um die Grundstruktur und den dreidimensionalen Körper herzustellen. Die Verbindungsmittel zur Schaffung von wieder lösbaren Verbindungen zwischen den Bauelementen können z.B. Schrauben und Schraubenmuttern, Haken und Ösen, Nut und Feder, Schnappverschlüsse sowie weitere Verbindungsmittel umfassen, wie sie z.B. von üblichen Konstruktions-Blockbausätzen zum Spielen her bekannt sind. Die Bauelement können aber auch mit gegenseitig passenden gehonten (d.h. hochglanzpolierten) Flächen versehen sein, so dass benachbarte Bauelemente durch Ansprengen (auch als "kittloses Verbinden" oder als "Kontaktverbinden" bezeichnet) miteinander verbunden werden können. Falls feste, unlösbare Verbindungen gewünscht werden, können die Bauelemente eines erfindungsgemässen Bausatzes auch durch Kleben, Schweissen oder andere geeignete Verfahren fest und unlösbar miteinander verbunden werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendete Zeichnung zeigt:

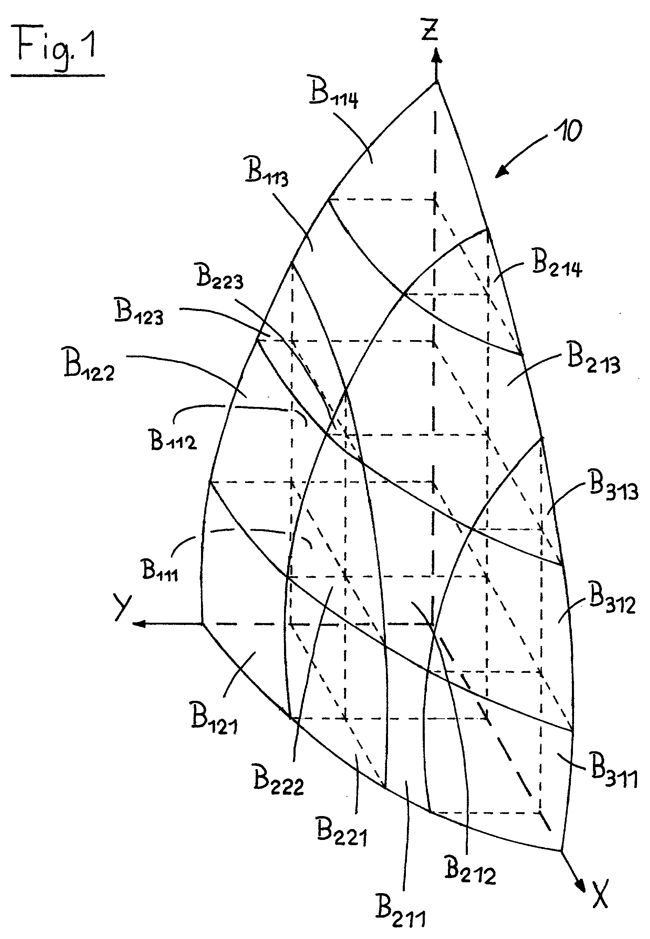

- Fig. 1: Einen aus einem Bausatz gemäss der Erfindung hergestellten dreidimensionalen Körper in einer vereinfachten perspektivischen Teilansicht.

Grundsätzlich sind in den Figuren gleiche Teile mit gleichen Bezugszeichen versehen.

### Wege zur Ausführung der Erfindung

In Fig. 1 ist in einer vereinfachten perspektivischen Darstellung ein dreidimensionaler Körper 10 dargestellt, der aus einem Bausatz gemäss der Erfindung hergestellt ist. Bei dem in Fig. 1 dargestellten Körper 10 handelt es sich um einen Vollkörper ohne jegliche Zwischen- oder Hohlräume. Zum Zwecke einer Veranschaulichung der Erfindung wurde ein sehr einfacher Körper 10 gewählt. Seine Oberfläche besteht aus drei ebenen und einer gekrümmten Teilflächen. Die drei ebenen Teilflächen sind nach Art von Aussenflächen eines Würfels je rechtwinklig zueinander angeordnet und bilden an ihrem Schnittpunkt eine Aussenecke nach Art einer Würfelecke, welche in Bezug auf den Körper 10 gegenüber der vierten, nach aussen gewölbten Teilfläche angeordnet ist. Die würfelartige Aussenecke des Körpers 10 definiert den Ursprung eines rechtwinkligen Koordinatensystems, dessen rechtwinklig zueinander verlaufende und sich im Ursprung schneidende Achsen X, Y, und Z durch die Schnittkanten zwischen den ebenen Teilflächen des Körpers 10 gebildet werden. In der Darstellung der Fig. 1 ist die den Ursprung definierende Ecke in Bezug auf den Körper 10 rechts hinten unten angeordnet, und die gekrümmte, nach aussen gewölbte Teilfläche bildet die Ansichtseite des Körpers 10. Zudem erstreckt sich die X-Achse vom Ursprung aus nach vorne, die Y-Achse nach links und die Z-Achse nach oben.

Der in Fig. 1 dargestellte Körper 10 ist aus insgesamt siebzehn Bauelementen zusammengesetzt, die nachfolgend entsprechend ihrer Anordnung vom Ursprung aus entlang den X-, Y- und Z-Achsen als B_{xyz} bezeichnet werden. Zwei dieser siebzehn Bauelemente, nämlich das direkt beim Ursprung angeordnete Element B₁₁₁ (welches die den Ursprung definierende Ecke aufweist) und das auf diesem angeordnete Element B₁₁₂ sind universell verwendbare Standardbauelemente, während die übrigen fünfzehn Elemente Spezialbauelemente sind, die speziell zur Herstellung des in Fig. 1 dargestellten dreidimensionalen Körpers 10 angefertigt worden sind. Der Bausatz für die Herstellung des in Fig. 1 dargestellten dreidimensionalen Körpers 10 umfasst somit zwei Standardbauelemente und fünfzehn Spezialbauelemente.

Die Grundstruktur des in Fig. 1 dargestellten dreidimensionalen Körpers 10 ist lediglich aus den zwei Standardbauelementen B₁₁₁ und B₁₁₂ zusammengesetzt. Diese beiden Standardbauelemente B₁₁₁, B₁₁₂ sind Teil eines Bausatzes von zueinander identischen, würfelförmig ausgebildeten Standardbauelementen für das Zusammensetzen von Grundstrukturen, die an dreidimensionale Körper mit beliebig gekrümmten Oberflächen angenähert sind. Werden die identischen würfelförmigen Standardbauelemente derart angeordnet, dass die quadratischen Flächen von benachbarten Standardbauelementen einander jeweils vollständig überdecken, so entstehen Grundstrukturen, bei denen die Standardbauelemente an den Gitterpunkten eines Ausschnittes aus einem regelmässigen kubischen Raumgitter angeordnet sind. Diese Grundstrukturen können zudem durch Schnittflächen aus drei Reihen von Parallelebenen bestimmt werden, wobei die Parallelebenen von jeder Reihe die Parallelebenen der beiden anderen Reihen je unter einem rechten Winkel schneiden und jeweils mit einem einheitlichen Abstand (gemessen senkrecht zu den Ebenen) zwischen den Ebenen angeordnet sind. Weiter können die würfelförmigen Standardbauelemente in raumfüllender Anordnung zwischenraumfrei zu solchen Grundstrukturen zusammengesetzt werden, wie dies auch bei dem in Fig. 1 dargestellten Beispiel der Fall ist.

An der aus den beiden Standardbauelementen B₁₁₁ und B₁₁₂ zusammengesetzten Grundstruktur sind die insgesamt fünfzehn Spezialbauelemente B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, und B₃₁₃ entweder direkt oder indirekt über andere Spezialbauelemente angebracht. Sämtliche dieser Spezialbauelemente weisen Bauformen auf, die durch Abschneiden eines Teils eines Standardbauelementes entstehen, wobei die entsprechenden Schnittflächen der Spezialbauelemente an der gekrümmten, nach aussen gewölbten Teilfläche der Oberfläche des in Fig. 1 dargestellten dreidimensionalen Körpers 10 angeordnet sind. Die gesamte gekrümmte Teilfläche der Körperoberfläche wird ausschliesslich durch die erwähnten Schnittflächen der Spezialbauelemente gebildet, während die ebenen Teilflächen der Körperoberfläche teilweise durch ebene Flächen der Spezialbauelemente und teilweise durch ebene Flächen der Standardbauelemente gebildet werden.

Die Bauelemente für die Herstellung des in Fig. 1 dargestellten Körpers sind aus Holz angefertigt. Im zum Körper 10 zusammengesetzten Zustand ist jedes Bauelement mittels Leim mit den benachbarten Bauelementen verbunden, wobei die Bauelemente jeweils Fläche an Fläche mit einander überdeckenden ebenen Flächen (nachfolgend auch als Kontaktflächen bezeichnet) angeordnet sind. Im Falle der Standardbauelemente B₁₁₁, B₁₁₂ und der an diese angrenzenden Spezialbauelemente sind diese Kontaktflächen quadratisch, während die Kontaktflächen zwischen benachbarten Spezialbauelementen auch die Form von Abschnitten von solchen quadratischen Flächen aufweisen können. Zum Zwecke einer Verdeutlichung der Prinzipien der Erfindung sind in der Darstellung der Fig. 1 die sichtbaren Begrenzungslinien der einzelnen Bauelemente in durchgezogenen Linien dargestellt, während die unsichtbaren (d.h. die durch die Ansichtseite der Körperoberfläche verdeckten) Begrenzungslinien in unterbrochenen Linien dargestellt sind.

Zur Erstellung des Bausatzes, aus dem der in Fig. 1 dargestellte Körper 10 hergestellt ist, wurde zunächst in einem ersten Schritt die Oberfläche des herzustellenden dreidimensionalen Körpers 10 durch Vorgabe einer Vielzahl von diskreten Stützpunkten im dreidimensionalen Raum definiert. Anschliessend wurden aus mehreren zur Verfügung stehenden Bausätzen von Standardbauelementen diejenigen Standardbauelemente B₁₁₁, B₁₁₂ ausgewählt, welche eine für den herzustellenden dreidimensionalen Körper 10 geeignete Grössen haben.

Ausgehend von der gegebenen würfelartigen Bauform der ausgewählten Standardbauelemente B₁₁₁, B₁₁₂ wurde dann in einem weiteren Schritt eine an die Oberfläche des Körpers 10 angenäherte Grundstruktur derart bestimmt, dass sie vollständig aus den Standardbauelementen zusammensetzbar ist und vollständig in dem von der Körperoberfläche begrenzten Raum derart angeordnet werden kann, dass sie an keiner Stelle die Körperoberfläche durchdringt. Dabei wurde die Grundstruktur derart festgelegt, dass sie aus zwei übereinander angeordneten Standardbauelementen B₁₁₁, B₁₁₂ zusammensetzbar ist, wobei die würfelartige Ecke des dreidimensionalen Körpers 10 durch eine Würfelecke eines der Standardbauelemente B₁₁₁ gebildet wird und die drei ebenen Teilflächen der Oberfläche des Körpers 10 teilweise durch die Würfelflächen der Standardbauelemente B₁₁₁, B₁₁₂ gebildet werden.

Anschliessend wurden die Bauformen der Spezialbauelemente B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃ bestimmt. Für diesen Zwecke wurde zunächst mit Hilfe sogenannter NURBS (Non-Uniform Rational B-Splines) eine Spline-Interpolation zwischen den vorgegebenen Stützpunkten der Oberfläche des dreidimensionalen Körpers 10 durchgeführt. Die so erhaltene kontinuierliche Oberfläche des Körpers 10 wurde dann mit den durch die Würfelflächen der Standardbauelemente B₁₁₁, B₁₁₂ definierten Ebenen geschnitten. Auf diese Art wurden die Bauformen der Spezialbauelemente B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃ derart bestimmt, dass diese Bauformen jeweils Abschnitten von Würfelformen gemäss den Standardbauelementen B₁₁₁, B₁₁₂ entsprechen, wobei die Würfelformen derart abgeschnitten sind, dass sie den Raum zwischen der Grundstruktur und der Oberfläche des Körpers 10 vollständig ausfüllen.

Schliesslich wurden in einem weiteren Schritt die Spezialbauelemente B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃ entsprechend den zuvor bestimmten Bauform angefertigt. Dadurch wurde der Bausatz zur Herstellung des in Fig. 1 dargestellten dreidimensionalen Körpers 10 erhalten, wobei dieser Bausatz nebst den Spezialbauelementen B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃ zusätzlich noch die Standardbauelemente B₁₁₁, B₁₁₂ umfasst.

Aus diesem Bausatz wurde dann der in Fig. 1 dargestellte Körper 10 hergestellt, indem zunächst die Grundstruktur aus den Standardbauelementen zusammengesetzt und anschliessend an der Grundstruktur die Spezialbauelemente B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃ angebracht wurden.

Bei der in Fig. 1 dargestellten Ausführungsart der Erfindung weisen sämtliche Spezialbauelemente B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, und B₃₁₃ in allen Richtungen Abmessungen auf, die entweder kleiner als oder höchstens gleich gross wie die entsprechenden Abmessungen der Standardbauelemente B₁₁₁, B₁₁₂ sind. Gemäss einer anderen, nicht in den Figuren dargestellten Ausführungsart der Erfindung können die Spezialbauelemente jedoch auch grösser ausgebildet sein als die Standardbauelemente. So wäre es beispielsweise möglich, die drei übereinander angeordneten Spezialbauelemente B₃₁₁, B₃₁₂ und B₃₁₃ des in Fig. 1 dargestellten Bausatzes als ein einziges einstückiges, säulenförmiges Spezialbauelement anzufertigen. Eine solche Anfertigung von grösseren Spezialbauelementen zur Vermeidung des Erfordernisses, einzelne sehr kleine Spezialbauelemente anfertigen zu müssen, erweist sich insbesondere bei Bausätzen als Vorteil, deren Bauelemente mit Verbindungsmitteln zur wahlweise wieder lösbaren Verbindung mit weiteren Bauelementen versehen sind, da bei zu kleinen Bauelementen der Platz für die Anordnung der Verbindungsmittel zu klein ist. Bei einem zu dem in Fig. 1 dargestellten ähnlichen Beispiel könnte insbesondere das sehr kleine Spezialbauelement B₂₂₃ als integraler Bestandteil eines seiner benachbarten Spezialbauelemente angefertigt werden.

Zusammenfassend ist festzustellen, dass durch die Erfindung ein Verfahren zur Erstellung eines Bausatzes für die Herstellung eines dreidimensionalen Körpers mit einer beliebig gekrümmten Oberfläche und ein durch ein solches Verfahren erstellter Bausatz angegeben werden, welcher eine vergleichsweise einfache und kostengünstige Herstellung des dreidimensionalen Körpers ermöglicht.

## Patentansprüche

1. Verfahren zur Erstellung eines Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) und Standardbauelemente (B₁₁₁, B₁₁₂) umfassenden Bausatzes für die Herstellung eines dreidimensionalen Körpers (10) mit einer beliebig gekrümmten Oberfläche, das die Schritte umfasst:
a) die Körperoberfläche zu definieren;
b) die Standardbauelemente (B₁₁₁, B₁₁₂) bereitzustellen;
c) eine an die Körperoberfläche angenäherte Grundstruktur derart zu bestimmen, dass sie vollständig aus den Standardbauelementen (B₁₁₁, B₁₁₂) zusammensetzbar ist und vollständig in dem von der Körperoberfläche begrenzten Raum derart angeordnet werden kann, dass sie an keiner Stelle die Körperoberfläche durchdringt;
d) die Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) mit je einer dreidimensionale Bauform derart zu bestimmen, dass der Körper vollständig herstellbar ist, indem die Grundstruktur aus den Standardbauelementen (B₁₁₁, B₁₁₂) zusammengesetzt wird und an der Grundstruktur die Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) angebracht werden, wobei wenigstens ein Teil ihrer Oberflächenpartien an der Körperoberfläche angeordnet werden;
e) die Spezialbauelemente anzufertigen.

2. Verfahren nach Anspruch 1, **dadurch gekennzeichnet, dass** im Schritt c) die Grundstruktur durch Schnittflächen aus drei Reihen von Parallelebenen bestimmt wird, wobei die Parallelebenen von jeder Reihe die Parallelebenen der beiden anderen Reihen je unter einem vorgegebenen Winkel schneiden.

3. Verfahren nach Anspruch 1 oder 2, **dadurch gekennzeichnet, dass** im Schritt c) die Grundstruktur nach Art einer Kristallstruktur derart bestimmt wird, dass nach dem Zusammensetzen der Grundstruktur aus den Standardbauelementen (B₁₁₁, B₁₁₂) diese an den Gitterpunkten eines Ausschnittes aus einem regelmässigen Raumgitter, insbesondere einem Bravais-Gitter, angeordnet sind.

4. Verfahren nach einem der Ansprüche 1 bis 3, **dadurch gekennzeichnet, dass** im Schritt d) wenigstens eine an der Körperoberfläche anzuordnende Oberflächenpartie eines Spezialbauelementes (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) mittels Spline-Interpolation zwischen definierten Stützpunkten der Körperoberfläche in der Umgebung des Spezialbauelementes (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) bestimmt wird, vorzugsweise mit Hilfe sogenannter NURBS (Non-Uniform Rational B-Splines).

5. Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) und Standardbauelemente (B₁₁₁, B₁₁₂) umfassender Bausatz für die Herstellung eines dreidimensionalen Körpers (10) mit einer beliebig gekrümmten Oberfläche, erstellt durch das Verfahren nach einem der Ansprüche 1 bis 4, **gekennzeichnet durch** eine Ausbildung der Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) und der Standardbauelemente (B₁₁₁, B₁₁₂) derart, dass der Körper (10) vollständig herstellbar ist, indem zunächst eine Grundstruktur aus den Standardbauelementen (B₁₁₁, B₁₁₂) zusammengesetzt wird und anschliessend an der Grundstruktur die Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) angebracht werden, wobei wenigstens ein Teil ihrer Oberflächenpartien an der Körperoberfläche angeordnet werden.

6. Bausatz nach Anspruch 5, **gekennzeichnet durch** eine Ausbildung der Standardbauelemente (B₁₁₁, B₁₁₂) derart, dass sie in raumfüllender Anordnung zwischenraumfrei zu der an die Körperoberfläche angenäherten Grundstruktur zusammensetzbar sind.

7. Bausatz nach Anspruch 5 oder 6, **dadurch gekennzeichnet, dass** sämtliche Standardbauelemente (B₁₁₁, B₁₁₂) im Wesentlichen identisch zueinander ausgebildet sind.

8. Bausatz nach einem der Ansprüche 5 bis 7, **dadurch gekennzeichnet, dass** jedes Standardbauelement (B₁₁₁, B₁₁₂) im Wesentlichen die Form eines Würfels, eines Quaders, eines Parallelepipeds, eines Tetraeders, eines Oktaeders, eines Rhomben-Dodekaeders, eines Pentagon-Dodekaeders, eines Ikosaeders oder eines anderen Polyeders aufweist.

9. Bausatz nach einem der Ansprüche 5 bis 8, **dadurch gekennzeichnet, dass** die Standardbauelemente als wiederverwendbare Bauelemente ausgebildet sind und dass jedes Bauelement mit Verbindungsmitteln zum wahlweise wieder lösbaren Verbinden mit wenigstens einem weiteren Bauelement des Bausatzes versehen ist.

10. Bausatz nach Anspruch 9, **dadurch gekennzeichnet, dass** die Verbindungsmittel eine an einem ersten Bauelement ausgebildete Steckerpartie und eine an einem zweiten Bauelement komplementär zur Steckerpartie ausgebildete Buchsenpartie umfassen.

11. Bausatz nach Anspruch 10, **dadurch gekennzeichnet, dass** die Verbindungsmittel ein an einer Aussenfläche eines ersten Bauelementes angebrachtes erstes Klettelement und ein an einer Aussenfläche eines zweiten Bauelementes angebrachtes zweites Klettelement umfassen, wobei zum Verbinden der beiden Bauelemente miteinander diese mit ihren mit den Klettelementen versehenen Aussenflächen gegeneinander pressbar sind, um eine Verbindung nach Art eines Klettverschlusses zu schaffen.

12. Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) für einen Bausatz nach Anspruch 5 für die Herstellung eines dreidimensionalen Körpers (10) mit einer beliebig gekrümmten Oberfläche, **gekennzeichnet durch** eine Ausbildung der Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) derart, dass der Körper (10) vollständig herstellbar ist, indem an einer aus Standardbauelementen (B₁₁₁, B₁₁₂) zusammengesetzten Grundstruktur die Spezialbauelemente (B₁₁₃; B₁₁₄, B₁₂₁, B₁₂₂, B₁₂₃; B₂₁₁, B₂₁₂, B₂₁₃, B₂₁₄; B₂₂₁, B₂₂₂, B₂₂₁, B₃₁₁; B₃₁₂, B₃₁₃) angebracht werden, wobei wenigstens ein Teil ihrer Oberflächenpartien an der Körperoberfläche angeordnet werden.
